(19)

Europäisches
Patentamt
European
Patent Office
Office européen
des brevets

(11) **EP 4 442 752 A1**

(12) **EUROPEAN PATENT APPLICATION**
published in accordance with Art. 153(4) EPC

(43) Date of publication:
**09.10.2024 Bulletin 2024/41**

(21) Application number: **22900893.3**

(22) Date of filing: **28.09.2022**

(51) International Patent Classification (IPC):
*C08L 21/00* $^{(2006.01)}$    *B60C 1/00* $^{(2006.01)}$
*C08K 3/04* $^{(2006.01)}$

(52) Cooperative Patent Classification (CPC):
**B60C 1/00; C08K 3/04; C08L 21/00;** Y02T 10/86

(86) International application number:
**PCT/JP2022/036145**

(87) International publication number:
**WO 2023/100458 (08.06.2023 Gazette 2023/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.12.2021   JP 2021197142**

(71) Applicant: **BRIDGESTONE CORPORATION
Chuo-ku
Tokyo 104-8340 (JP)**

(72) Inventor: **TAKAHASHI, Yuki
Tokyo 104-8340 (JP)**

(74) Representative: **Marks & Clerk LLP
15 Fetter Lane
London EC4A 1BW (GB)**

(54) **RUBBER COMPOSITION FOR TIRE, TREAD, AND TIRE**

(57)    Provided are a rubber composition for a tire that has excellent processability and enables production of vulcanized rubber having excellent wear resistance and breaking strength, and a tread and a tire that have excellent wear resistance and breaking strength. The tire rubber composition contains a rubber component and carbon black having an oil absorption number of compressed sample of 105 mL/100 g to 122 mL/100 g, a cetyltrimethylammonium bromide specific surface area of more than 130 $m^2$/g and not more than 153 $m^2$/g, $\Delta D_{50}/D_{st}$ of 0.75 to 0.88, an oil absorption number of not less than 120 mL/100 g and less than 143 mL/100 g, a difference between the oil absorption number of compressed sample and the oil absorption number of not less than 11 mL/100 g and less than 33 mL/100 g, and hydrogen evolution of not less than 2,300 mass ppm and less than 3,500 mass ppm.

EP 4 442 752 A1

**Description**

TECHNICAL FIELD

The present disclosure relates to a rubber composition for a tire, a tread, and a tire.

BACKGROUND

In recent years, there has been demand for tires having low rolling resistance in order to reduce automobile fuel consumption under social demand for energy efficiency and resource conservation. Known methods for reducing rolling resistance of a tire in response to such demand include reducing the amount of carbon black that is used and appropriately selecting the grade of carbon black that is used.

However, there are cases in which simply reducing the amount of carbon black that is used is undesirable with respect to wear resistance of a rubber composition. Moreover, although it is also possible to enhance rolling resistance by increasing the proportion constituted by polybutadiene rubber among a rubber component and by providing a rubber composition with high elasticity, there have been cases in which this has also reduced the tear resistance of the rubber composition.

Accordingly, as one example of a rubber composition that can improve wear resistance and wet performance while also reducing rolling resistance when used for a tire, a disclosed rubber composition (refer to Patent Literature (PTL) 1) contains: (A) a rubber component; (B) carbon black for rubber compounding that is obtained by using a reaction apparatus in which a combustion gas production zone, a reaction zone, and a reaction termination zone are linked to produce a high-temperature combustion gas in the combustion gas production zone and to subsequently introduce a raw material into the reaction zone by spraying, rapidly cool a reaction gas stream containing carbon black, and end the reaction; (C) an organic silicon compound having one or more sulfur atoms and a cyclic structure including a nitrogen atom and a silicon atom in a molecule, and also having a moiety where one or more small steric hinderance groups are bonded to a silicon atom; and (D) an inorganic filler, wherein the carbon black for rubber compounding satisfies certain relationship formulae.

CITATION LIST

Patent Literature

PTL 1: JP2012-87173A

SUMMARY

(Technical Problem)

However, even when mechanical characteristics of vulcanized rubber have been improved with a conventional rubber composition, there have been instances in which processability of the rubber composition has decreased.

The present disclosure is made in light of the circumstances set forth above and addresses the provision of a rubber composition for a tire that has excellent processability and enables production of vulcanized rubber having excellent wear resistance and breaking strength, and also the provision of a tread and a tire that have excellent wear resistance and breaking strength.

(Solution to Problem)

<1> A rubber composition for a tire comprising:

a rubber component; and
carbon black having an oil absorption number of compressed sample of not less than 105 mL/100 g and not more than 122 mL/100 g, a cetyltrimethylammonium bromide specific surface area of more than 130 $m^2$/g and not more than 153 $m^2$/g, a value of not less than 0.75 and not more than 0.88 for a ratio $\Delta D_{50}/D_{st}$ of peak full width at half maximum $\Delta D_{50}$ relative to a Stokes equivalent diameter $D_{st}$ giving a maximum frequency in an aggregate distribution obtained by centrifugal sedimentation, an oil absorption number of not less than 120 mL/100 g and less than 143 mL/100 g, a difference between the oil absorption number of compressed sample and the oil absorption number of not less than 11 mL/100 g and less than 33 mL/100 g, and hydrogen evolution of not less than 2,300 mass ppm and less than 3,500 mass ppm.

<2> The rubber composition for a tire according to the foregoing <1>, wherein the content of the carbon black is 5 parts by mass to 120 parts by mass relative to 100 parts by mass of the rubber component.
<3> A tread in which the rubber composition for a tire according to the foregoing <1> or <2> is used.
<4> A tire in which the rubber composition for a tire according to the foregoing <1> or <2> is used.

(Advantageous Effect)

According to the present disclosure, it is possible to provide a rubber composition for a tire that has excellent processability and enables production of vulcanized rubber having excellent wear resistance and breaking strength, and also a tread and a tire that have excellent wear resistance and breaking strength.

DETAILED DESCRIPTION

<Rubber composition for tire>

A rubber composition for a tire according to the present disclosure contains a rubber component and carbon black having an oil absorption number of compressed sample of not less than 105 mL/100 g and not more than 122 mL/100 g, a cetyltrimethylammonium bromide specific surface area of more than 130 $m^2/g$ and not more than 153 $m^2/g$, a value of not less than 0.75 and not more than 0.88 for a ratio ($\Delta D_{50}/D_{st}$) of peak full width at half maximum $\Delta D_{50}$ relative to a Stokes equivalent diameter $D_{st}$ giving a maximum frequency in an aggregate distribution obtained by centrifugal sedimentation, an oil absorption number of not less than 120 mL/100 g and less than 143 mL/100 g, a difference between the oil absorption number of compressed sample and the oil absorption number of not less than 11 mL/100 g and less than 33 mL/100 g, and hydrogen evolution of not less than 2,300 mass ppm and less than 3,500 mass ppm.
In the following description, the "cetyltrimethylammonium bromide specific surface area" may be referred to as the "CTAB specific surface area" or may be abbreviated simply as "CTAB".
The "oil absorption number" may be abbreviated as "OAN".
The "oil absorption number of compressed sample" may be abbreviated simply as "COAN".
The "difference between the oil absorption number of compressed sample and the oil absorption number" may be referred to as "$\Delta$OAN".
The "rubber composition for a tire" may be referred to simply as a "rubber composition".
The wear resistance and breaking strength of vulcanized rubber have conventionally been improved by increasing the degree of development of an aggregate structure of carbon black to provide the carbon black with higher structure and reducing the particle size of carbon black so as to increase the CTAB specific surface area of carbon black, etc. On the other hand, controlling the form of carbon black in this manner makes reduction of rubber composition processability more likely, and thus improvement of wear resistance and breaking strength of vulcanized rubber and maintenance of processability of a rubber composition have been antagonistic.
In contrast, the rubber composition according to the present disclosure, as a result of having the configuration set forth above, makes it possible to obtain vulcanized rubber having excellent wear resistance and breaking strength without reducing processability of the rubber composition and, in particular, can improve wear resistance of vulcanized rubber. Although it is not clear why this is the case, it is presumed to be for the following reason.
It is thought that breaking strength of vulcanized rubber is improved in the present disclosure by using small particle size carbon black such that the CTAB specific surface area is more than 130 $m^2/g$ and not more than 153 $m^2/g$ and that the amount of occluded rubber that is physically occluded in the carbon black can be increased and wear resistance of vulcanized rubber can be improved in the present disclosure by using high-structure carbon black having an oil absorption number of not less than 120 mL/100 g and less than 143 mL/100 g and an oil absorption number of compressed sample of not less than 105 mL/100 g and not more than 122 mL/100 g. It is also thought that by providing the carbon black with a sharp aggregate distribution, an increase of large particle size components in the carbon black can be suppressed, and wear resistance can be improved.
Although reducing the particle size of carbon black can reduce processability of a rubber composition as previously described, the carbon black that is used in the present disclosure has low values for $\Delta$OAN and hydrogen evolution, which indicate the degree of surface activity of the carbon black. Therefore, aggregation of the carbon black can be inhibited, and loss of rubber composition processability does not easily arise.
The rubber composition according to the present disclosure is presumed to have excellent processability and enable production of vulcanized rubber having excellent wear resistance and breaking strength for this reason.
The following provides a detailed description of a rubber composition, a tread, and a tire according to the present disclosure.

{Rubber component}

The rubber composition according to the present disclosure contains a rubber component.

The rubber component may be one or more diene rubbers selected from the group consisting of natural rubber (NR) and synthetic diene rubber.

The synthetic diene rubber may, more specifically, include polyisoprene rubber (IR), polybutadiene rubber (BR), styrene-butadiene copolymer rubber (SBR), butadiene-isoprene copolymer rubber (BIR), styreneisoprene copolymer rubber (SIR), styrene-butadiene-isoprene copolymer rubber (SBIR), or the like.

The diene rubber is preferably natural rubber (NR), polyisoprene rubber (IR), styrene-butadiene copolymer rubber (SBR), or polybutadiene rubber (BR), and more preferably natural rubber, polyisoprene rubber, or polybutadiene rubber.

One diene rubber may be used individually, or two or more diene rubbers may be used as a blend.

The diene rubber may be a modified rubber.

Although the rubber component may include just one of natural rubber and synthetic diene rubber or may include both natural rubber and synthetic diene rubber, it is preferable that the rubber component includes at least natural rubber from a viewpoint of improving wear resistance and breaking strength of a tread and a tire.

The proportion constituted by natural rubber in the rubber component is preferably more than 50 mass%, and more preferably 55 mass% or more from a viewpoint of further improving wear resistance and breaking strength of a tread and a tire.

The rubber component may include a non-diene rubber to the extent that effects according to the present disclosure are not lost.

{Carbon black}

The rubber composition according to the present disclosure contains carbon black having an oil absorption number of compressed sample of not less than 105 mL/100 g and not more than 122 mL/100 g, a cetyltrimethylammonium bromide specific surface area of more than 130 $m^2$/g and not more than 153 $m^2$/g, a value of not less than 0.75 and not more than 0.88 for a ratio ($\Delta D_{50}/D_{st}$) of peak full width at half maximum $\Delta D_{50}$ relative to a Stokes equivalent diameter $D_{st}$ giving a maximum frequency in an aggregate distribution obtained by centrifugal sedimentation, an oil absorption number of not less than 120 mL/100 g and less than 143 mL/100 g, a difference between the oil absorption number of compressed sample and the oil absorption number of not less than 11 mL/100 g and less than 33 mL/100 g, and hydrogen evolution of not less than 2,300 mass ppm and less than 3,500 mass ppm.

(Oil absorption number of compressed sample)

The carbon black has an oil absorption number of compressed sample (COAN) of not less than 105 mL/100 g and not more than 122 mL/100 g.

The oil absorption number of compressed sample (mL/100 g) is a value determined by measuring the oil absorption number (OAN) of a sample after four repetitions of pressure application with a pressure of 165 MPa in accordance with Appendix A of JIS K 6217-4:2017. This oil absorption number of compressed sample is an indicator for evaluating the skeletal structure specification of carbon black based mainly on the primary structure thereof and is used when determining the oil absorption number based on non-destructive true structural form (primary structure) by excluding the oil absorption number based on deformable and destructive structural form (secondary structure) formed through so-called Van der Waals forces.

Rubber reinforcing force is not strengthened and vulcanized rubber does not have excellent wear resistance when the oil absorption number of compressed sample of the carbon black is less than 105 mL/100 g, whereas viscosity of the rubber composition increases and processability of the rubber composition decreases when the oil absorption number of compressed sample of the carbon black is more than 122 mL/100 g.

From these viewpoints, the oil absorption number of compressed sample is preferably 107 mL/100 g to 120 mL/100 g, and more preferably 107 mL/100 g to 118 mL/100 g.

The oil absorption number of compressed sample is measured by a method described in ASTM D3493-21 (JIS K6217-4:2017).

(CTAB specific surface area)

The carbon black has a cetyltrimethylammonium bromide specific surface area (CTAB specific surface area) of more than 130 m$^2$/g and not more than 153 m$^2$/g.

Vulcanized rubber does not have excellent wear resistance and breaking strength when the CTAB specific surface area of the carbon black is 130 m$^2$/g or less, whereas the rubber composition does not have excellent processability when the CTAB specific surface area of the carbon black is more than 153 m$^2$/g. From a viewpoint of further improving wear resistance and breaking strength of vulcanized rubber, the CTAB specific surface area of the carbon black is preferably 132 m$^2$/g or more, and more preferably 134 m$^2$/g or more. Moreover, from a viewpoint of further improving processability of the rubber composition, the CTAB specific surface area of the carbon black is preferably 150 m$^2$/g or less, and more preferably 148 m$^2$/g or less.

The CTAB specific surface area of the carbon black can be measured by a method in accordance with JIS K 6217-3 :2001 (Determination of specific surface area - CTAB adsorption methods).

$$(\Delta D_{50}/D_{st})$$

The carbon black has a value of not less than 0.75 and not more than 0.88 for a ratio ($\Delta D_{50}/D_{st}$) of peak full width at half maximum $\Delta D_{50}$ relative to a Stokes equivalent diameter $D_{st}$ giving a maximum frequency in an aggregate distribution obtained by centrifugal sedimentation.

$\Delta D_{50}$ (nm) is the width of the distribution at half of the height of a maximum point for frequency on the aggregate distribution curve obtained by centrifugal sedimentation.

$D_{st}$ is the aggregate size giving the maximum frequency in the aggregate distribution obtained by centrifugal sedimentation in accordance with a method described in JIS K6217-6:2019 and is also referred to as the Stokes sedimentation diameter. $D_{st}$ is taken to be the average diameter of carbon black aggregates.

Note that the aggregate distribution of the carbon black referred to in the present disclosure is an aggregate distribution by volume.

When $\Delta D_{50}/D_{st}$ is less than 0.75, dispersibility of the carbon black in the rubber composition deteriorates, and processability of the rubber composition is lost. When $\Delta D_{50}/D_{st}$ is more than 0.88, vulcanized rubber does not have excellent breaking strength.

$\Delta D_{50}/D_{st}$ is preferably 0.77 to 0.87, more preferably 0.78 to 0.86, and even more preferably 0.79 to 0.86.

$\Delta D_{50}$ of the carbon black is preferably 60 nm or less.

Through $\Delta D_{50}$ of the carbon black being 60 nm or less, wear resistance of vulcanized rubber can be further improved. Although no specific limitations are placed on the lower limit for $\Delta D_{50}$ of the carbon black, $\Delta D_{50}$ of the carbon black is preferably 20 nm or more from a viewpoint of producibility. From the above-described viewpoints, $\Delta D_{50}$ of the carbon black is more preferably 20 nm to 55 nm, and even more preferably 25 nm to 50 nm.

(Oil absorption number)

The carbon black has an oil absorption number (OAN) of not less than 120 mL/100 g and less than 143 mL/100 g.

The oil absorption number is the volume (mL) of oil that is absorbed per 100 g of the carbon black and is an indicator of the degree of development of aggregates formed of primary particles of the carbon black. The used oil is dibutyl phthalate (DBP), paraffinic oil, or epoxidized fatty acid ester (EFA).

When the oil absorption number is less than 120 mL/100 g, structure development is inadequate, reinforcement capability is not obtained, and wear resistance of a tire is lost. When the oil absorption number is 143 mL/100 g or more, excessive structure development causes deterioration of dispersibility of the carbon black in the rubber composition and loss of processability of the rubber composition.

From these viewpoints, the oil absorption number of the carbon black is preferably 122 mL/100 g to 142 mL/100 g, more preferably 125 mL/100 g to 141 mL/100 g, and even more preferably 127 mL/100 g to 140 mL/100 g.

The oil absorption number is measured by a method described in ASTM D2414-21 (JIS K6217-4:2017).

($\Delta$OAN)

The carbon black has a difference ($\Delta$OAN) between the oil absorption number of compressed sample and the oil absorption number of not less than 11 mL/100 g and less than 33 mL/100 g.

$\Delta$OAN is an indicator of surface activity of the carbon black. When $\Delta$OAN is less than 11 mL/100 g, wear resistance of vulcanized rubber decreases due to low surface activity and reduced interaction between the rubber component and the carbon black. When $\Delta$OAN is more than 33 mL/100 g, softness of vulcanized rubber is lost and processability of the rubber composition decreases due to excessively high surface activity and excessive interaction between the rubber and the carbon black. In addition, dispersibility of the carbon black in the rubber composition decreases, and wear resistance of vulcanized rubber decreases.

From these viewpoints, ΔOAN is preferably 13 mL/100 g to 32 mL/100 g, more preferably 15 mL/100 g to 30 mL/100 g, and even more preferably 17 mL/100 g to 29 mL/100 g.

(Hydrogen evolution)

The carbon black has hydrogen evolution of not less than 2,300 mass ppm and less than 3,500 mass ppm.

When the hydrogen evolution is less than 2,300 mass ppm, wear resistance of vulcanized rubber decreases due to low surface activity and reduced interaction between the rubber component and the carbon black. When hydrogen evolution is 3,500 mass ppm or more, softness of vulcanized rubber is lost and processability of the rubber composition decreases due to excessively high surface activity and excessive interaction with the rubber. In addition, dispersibility of the carbon black in the rubber composition decreases, and wear resistance of vulcanized rubber decreases.

From these viewpoints, the hydrogen evolution is preferably 2,400 mass ppm to 3,400 mass ppm, more preferably 2,450 mass ppm to 3,200 mass ppm, and even more preferably 2,500 mass ppm to 3,000 mass ppm.

The hydrogen evolution of the carbon black can be controlled through the combustion temperature of raw material hydrocarbon during production of the carbon black. Combusting the raw material hydrocarbon at high temperature can increase the hydrogen evolution, whereas a low combustion temperature tends to reduce the hydrogen evolution.

The hydrogen evolution in the present disclosure refers to the amount (mass ppm) of hydrogen gas evolved during 15 minutes of heating of the carbon black at 2000°C in an inert gas atmosphere using a gas chromatograph.

Measurement of the hydrogen evolution can, more specifically, be performed based on the following (i) to (iii). (i) Dry the carbon black for 1 hour in a 105°C constant-temperature dryer and then cool the carbon black to room temperature (23°C) in a desiccator. (ii) Precisely weigh out approximately 10 mg of the carbon black obtained in (i), and crimp and seal the carbon black in a tube-shaped sample container made of tin. (iii) Use a gas chromatograph to measure the amount of hydrogen gas evolved during 15 minutes of heating of the sample container at 2000°C under a stream of argon.

No specific limitations are placed on the type of the carbon black so long as the oil absorption number of compressed sample, CTAB specific surface area, $\Delta D_{50}/D_{st}$, oil absorption number, ΔOAN, and hydrogen evolution thereof are within the ranges set forth above. Moreover, a commercial product may be used as the carbon black.

Just one type of carbon black may be used, or two or more types of carbon black may be used.

The content of the carbon black in the rubber composition is 5 parts by mass to 120 parts by mass relative to 100 parts by mass of the rubber component.

Mechanical strength of vulcanized rubber improves and wear resistance and breaking strength of a tread and a tire can be further improved when the content of the carbon black is 5 parts by mass or more relative to 100 parts by mass of the rubber component, whereas processability of the rubber composition is less likely to decrease when the content of the carbon black is 120 parts by mass or less relative to 100 parts by mass of the rubber component.

From a viewpoint of further improving processability of the rubber composition and wear resistance and breaking strength of vulcanized rubber, the content of the carbon black in the rubber composition is more preferably 10 parts by mass to 100 parts by mass, and even more preferably 20 parts by mass to 80 parts by mass relative to 100 parts by mass of the rubber component.

The rubber composition according to the present disclosure may further contain a metal oxide such as silica, alumina, or titania, for example, as a filler in addition to the carbon black. Moreover, in a case in which the rubber composition contains silica, the rubber composition may contain a silane coupling agent.

(Various components)

Besides the rubber component and carbon black described above, various components that are generally used in the rubber industry such as vulcanizing agents, vulcanization accelerators, zinc oxide, stearic acid, and antioxidants can be selected as appropriate and compounded in the rubber composition according to the present disclosure to the extent that the object of the present disclosure is not impeded. Commercial products can suitably be used as these various components.

The rubber composition can be produced by compounding the rubber component, the carbon black, and various components that are selected as appropriate, kneading these components using a closed kneading device such as a Banbury mixer, an internal mixer, or an intensive mixer or an open kneading device such as rolls, and subsequently performed warming, extrusion, etc.

<Vulcanized rubber, tread, and tire>

Vulcanized rubber according to the present disclosure is rubber that is obtained through vulcanization of the rubber composition according to the present disclosure and has excellent wear resistance and breaking strength. Accordingly, the vulcanized rubber according to the present disclosure can be used in various rubber products such as tires, anti-vibration rubber, seismic isolation rubber, belts (conveyor belts, etc.), rubber crawlers, and various hoses.

For example, in a case in which the vulcanized rubber according to the present disclosure is used in a tire, the configuration of the tire can be selected as appropriate depending on the object without any specific limitations so long as the rubber composition according to the present disclosure is used. This tire has excellent wear resistance and breaking strength.

The site of adoption of the rubber composition according to the present disclosure in the tire can be selected as appropriate depending on the object without any specific limitations and may, for example, be a tire case, a tread, a base tread, a sidewall, side reinforcing rubber, a bead filler, or the like. In particular, the rubber composition according to the present disclosure is suitable for producing a tread.

The tire can be produced by a conventional method. For example, members typically used in tire production such as a carcass layer, a belt layer, and a tread layer that are formed of cords and the rubber composition according to the present disclosure are sequentially laminated on a tire molding drum, and then the drum is withdrawn to obtain a green tire. The green tire is then heated and vulcanized according to an ordinary method to produce a desired tire (for example, a pneumatic tire).

EXAMPLES

The following describes the present disclosure in more detail through Examples. However, the present disclosure is not in any way limited by the following Examples.

<Production of rubber composition>

Rubber compositions of Examples and Comparative Examples were each produced by mixing and kneading amounts of components indicated in Table 1 and also 3.8 parts by mass, in total, of a wax, a resin, a vulcanization retarder, and an antioxidant.

Details of the components in Table 1 are as follows. Details of carbon black are shown in Table 2.

NR: Natural rubber, RSS#1
BR: Butadiene rubber, produced by JSR Corporation, BR01 (product name)
Carbon black: Carbon black having characteristics shown in Table 2
Note that the carbon black used in Comparative Example 1 was N234-grade carbon black.

Besides the compounding agents indicated in Table 1, each of the rubber compositions contains 1.4 parts by mass of a vulcanization accelerator package and 3.8 parts by mass, in total, of other chemicals (inclusive of a wax, a resin, a vulcanization retarder, and an antioxidant). The antioxidant includes NOCRAC 6C (product name) produced by Ouchi Shinko Chemical Industrial Co., Ltd.

Various physical properties of carbon black shown in Table 2 were determined by the following methods.

1. COAN, OAN, ∆OAN

The oil absorption number (OAN) and the oil absorption number of compressed sample (COAN) were measured by methods described in ASTM D2414-88 (JIS K6217-4:2001).

∆OAN was calculated as the difference between the oil absorption number and the oil absorption number of compressed sample obtained by measurement.

2. CTAB specific surface area

The CTAB specific surface area ($m^2$/g) was measured by a method in accordance with JIS K 6217-3:2001 (Determination of specific surface area - CTAB adsorption methods).

3. Hydrogen evolution

Carbon black was dried for 1 hour in a 105°C constant-temperature dryer and was then cooled to room temperature (23°C) in a desiccator. Approximately 10 mg of the obtained carbon black was precisely weighed out, and this carbon black was crimped and sealed in a tube-shaped sample container made of tin. A gas chromatograph was used to measure the amount (mass ppm) of hydrogen gas evolved during 15 minutes of heating of the sample container at 2000°C under a stream of argon.

4. $\Delta D_{50}/D_{st}$

$\Delta D_{50}/D_{st}$ was measured in accordance with ISO/CD 15825-3 as described below. A Disk Centrifuge Photosedimentometer (DCP) "BI-DCP Particle sizer" (produced by Brookhaven Instruments Corporation) was used as a measurement device.

Carbon black was added in an amount of 0.05 mass% to 0.1 mass% to a 25 volume% ethanol aqueous solution containing a small amount of a surfactant and was completely dispersed through ultrasonication (1/2 inch oscillation tip, power 50 W) to obtain a dispersion liquid. A rotary disk to which 17.5 mL of distilled water had been added as a sedimentation liquid (spin liquid) was set to a rotation speed of 8,000 rpm, and 0.02 mL to 0.03 mL of the dispersion liquid was added thereto. Simultaneously to addition of the dispersion liquid, a recorder was operated, the amount of carbon black aggregates passing a certain point in proximity to the periphery of the rotary disk due to sedimentation was optically measured, and a continuous curve of this light absorbance (frequency) versus time was recorded. The sedimentation time was converted to a Stokes equivalent diameter d using the Stokes general formula (i), shown below, so as to obtain a correspondence curve of aggregate Stokes equivalent diameter and frequency thereof.

$$d = K/\sqrt{t} \qquad (i)$$

In formula (i), d is the Stokes equivalent diameter (nm) of a carbon black aggregate passing the optical measurement point of the rotary disk at t minutes after the start of sedimentation. The constant K is a value that is determined by the temperature, viscosity, and density difference relative to carbon black (true density of carbon black taken to be 1.86 $g/cm^3$) of the spin liquid during measurement and the rotation speed of the rotary disk. In the present Examples and Comparative Examples, 17.5 mL of distilled water was used as the spin liquid, the measurement temperature was 23.5°C, and the disk rotation speed was 8,000 rpm, thus resulting in a constant K of 261.75.

The modal diameter $D_{st}$ (nm) and full width at half maximum $\Delta D_{50}$ (nm) were determined from results of this measurement, and a ratio ($\Delta D_{50}/D_{st}$) was calculated. Note that the modal diameter $D_{st}$ and the full width at half maximum $\Delta D_{50}$ are defined as follows.

Modal diameter $D_{st}$: The Stokes equivalent diameter giving a maximum frequency on the correspondence curve of aggregate Stokes equivalent diameter and frequency thereof described above
Full width at half maximum $\Delta D_{50}$: The width of the distribution at half of the height of a maximum point for frequency on the correspondence curve of aggregate Stokes equivalent diameter and frequency thereof described above

<Evaluation of rubber composition and vulcanized rubber>

Processability was evaluated for each obtained rubber composition. In addition, the rubber composition was vulcanized to obtain a vulcanized rubber test specimen, and this vulcanized rubber test specimen was used to evaluate wear resistance and breaking strength. The results are shown in Table 2.

1. Processability

The viscosity of the rubber composition of each Example or Comparative Example was measured at 130°C in accordance with JIS K 6300-1:2001 (Mooney viscosity). The viscosity of each rubber composition was expressed as an index value with the viscosity of the rubber composition of Comparative Example 1 set as 100.

A larger index value indicates that a rubber composition has better processability. The permissible range is 101 or more.

2. Wear resistance

Using a Lambourn Abrasion Tester, sandpaper was attached to an abrasion wheel, and the amount of wear of a vulcanized rubber test specimen was measured at room temperature with a slip rate of 6% to 30% in accordance with JIS K 6264-2:2005.

The amount of wear was expressed as an index value by the following formula with the reciprocal of the amount of wear of the vulcanized rubber test specimen of Comparative Example 1 set as 100. A larger index value indicates a smaller amount of wear and better wear resistance. The permissible range is 130 or more.

Wear resistance index value = {(Amount of wear of vulcanized rubber test specimen of Comparative Example 1)/(Amount of wear of vulcanized rubber test specimen of Example or Comparative Example other than Comaparative Example 1)} × 100

3. Breaking strength

The breaking strength (TB: Tensile strength at Break) of vulcanized rubber was measured as the maximum tensile force required to extend and break the vulcanized rubber at room temperature (25°C) based on JIS K 6251:2017.
The breaking strength in each Example and Comparative Example other than Comparative Example 1 was expressed as an index value with the breaking strength of the vulcanized rubber of Comparative Example 1 set as 100. A larger index value indicates that vulcanized rubber has larger breaking strength. The permissible range is 102 or more.

[Table 1]

Table 1

| Rubber composition formulation | |
|---|---|
| NR | 60 |
| BR | 40 |
| Carbon black | 50 |
| Stearic acid | 2 |
| Zinc oxide | 3.5 |
| Sulfur | 1.1 |
| (Parts by mass) | |

[Table 2]

Table 2

| | Carbon black characteristics | | | | | | Evaluation | | |
|---|---|---|---|---|---|---|---|---|---|
| | COAN | CTAB | $D_{50}/D_{st}$ | OAN | ΔOAN | Hydrogen evolution | Wear resistance | Breaking strength | Processability |
| | mL/ 100 g | $m^2/g$ | - | mL/ 100 g | mL/100 g | ppm | | | |
| Comparative Example 1 | 100.0 | 121.0 | 0.660 | 125.0 | 25.0 | 3673 | 100 | 100 | 100 |
| Comparative Example 2 | 115.2 | 110.1 | 0.676 | 166.9 | 51.0 | 3704 | 125 | 95 | 96 |
| Comparative Example 3 | 110.2 | 141. 8 | 0.835 | 122.5 | 12.3 | 1829 | 122 | 92 | 103 |
| Comparative Example 4 | 124.2 | 119.9 | 0.848 | 153.8 | 29.6 | 1904 | 107 | 95 | 79 |
| Comparative Example 5 | 113.0 | 117.0 | 0.695 | 150.7 | 38.0 | 2667 | 119 | 97 | 99 |

(continued)

| | Carbon black characteristics | | | | | | Evaluation | | |
|---|---|---|---|---|---|---|---|---|---|
| | COAN | CTAB | $D_{50}/D_{st}$ | OAN | $\Delta$OAN | Hydrogen evolution | Wear resistance | Breaking strength | Processability |
| | mL/ 100 g | $m^2$/g | - | mL/ 100 g | mL/100 g | ppm | | | |
| Comparative Example 6 | 112.9 | 122.9 | 0.707 | 149.2 | 36.0 | 2421 | 128 | 95 | 98 |
| Comparative Example 7 | 107.1 | 138.1 | 1.126 | 124.2 | 17.1 | 1992 | 89 | 96 | 110 |
| Example 1 | 111.0 | 140.5 | 0.841 | 138.2 | 27.2 | 2617 | 135 | 102 | 102 |
| Example 2 | 110.7 | 138.2 | 0.809 | 136.0 | 25.3 | 2789 | 141 | 104 | 101 |

It is clear from Table 2 that although the vulcanized rubbers of Comparative Examples 2 and 4 to 6 had improved wear resistance compared to Comparative Example 1, processability of the rubber compositions in these Comparative Examples was not excellent. Although processability of the rubber composition of Comparative Example 3 was excellent, breaking strength of the vulcanized rubber of Comparative Example 3 was not excellent. In contrast, the rubber compositions of the Examples had excellent processability, and the vulcanized rubbers of the Examples also had excellent wear resistance and breaking strength. Accordingly, by producing treads and tires using the rubber compositions of the Examples, it is possible to produce treads and tires having excellent wear resistance and breaking strength.

INDUSTRIAL APPLICABILITY

The use of the rubber composition for a tire according to the present disclosure can yield vulcanized rubber having excellent wear resistance and breaking strength without loss of processability of the rubber composition. Therefore, the rubber composition according to the present disclosure can suitably be used for tire cases, tread members, and so forth of various tires for passenger vehicles, light passenger vehicles, light trucks, and heavy loads (trucks, buses, off-road tires (for mine vehicles, construction vehicles, small trucks, etc.)).

**Claims**

1. A rubber composition for a tire comprising:

   a rubber component; and
   carbon black having an oil absorption number of compressed sample of not less than 105 mL/100 g and not more than 122 mL/100 g, a cetyltrimethylammonium bromide specific surface area of more than 130 $m^2$/g and not more than 153 $m^2$/g, a value of not less than 0.75 and not more than 0.88 for a ratio $\Delta D_{50}/D_{st}$ of peak full width at half maximum $\Delta D_{50}$ relative to a Stokes equivalent diameter $D_{st}$ giving a maximum frequency in an aggregate distribution obtained by centrifugal sedimentation, an oil absorption number of not less than 120 mL/100 g and less than 143 mL/100 g, a difference between the oil absorption number of compressed sample and the oil absorption number of not less than 11 mL/100 g and less than 33 mL/100 g, and hydrogen evolution of not less than 2,300 mass ppm and less than 3,500 mass ppm.

2. The rubber composition for a tire according to claim 1, wherein the content of the carbon black is 5 parts by mass to 120 parts by mass relative to 100 parts by mass of the rubber component.

3. A tread in which the rubber composition for a tire according to claim 1 or 2 is used.

4. A tire in which the rubber composition for a tire according to claim 1 or 2 is used.

## INTERNATIONAL SEARCH REPORT

| International application No. |
| --- |
| **PCT/JP2022/036145** |

**A.    CLASSIFICATION OF SUBJECT MATTER**

*C08L 21/00*(2006.01)i; *B60C 1/00*(2006.01)i; *C08K 3/04*(2006.01)i
FI:    C08L21/00; C08K3/04; B60C1/00 Z; B60C1/00 A

According to International Patent Classification (IPC) or to both national classification and IPC

**B.    FIELDS SEARCHED**

Minimum documentation searched (classification system followed by classification symbols)

C08L21/00; B60C1/00; C08K3/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2020-019834 A (SUMITOMO RUBBER IND., LTD.) 06 February 2020 (2020-02-06) claims, paragraphs [0006], [0018], [0020], [0022], [0026], examples 1-3, 2-3 | 1-4 |
| A | JP 2017-114981 A (BRIDGESTONE CORP.) 29 June 2017 (2017-06-29) | 1-4 |
| A | JP 2021-095549 A (BRIDGESTONE CORP.) 24 June 2021 (2021-06-24) | 1-4 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 November 2022** | **29 November 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/036145**

| Patent document cited in search report | | | Publication date (day/month/year) | Patent family member(s) | Publication date (day/month/year) |
|---|---|---|---|---|---|
| JP | 2020-019834 | A | 06 February 2020 | (Family: none) | |
| JP | 2017-114981 | A | 29 June 2017 | (Family: none) | |
| JP | 2021-095549 | A | 24 June 2021 | (Family: none) | |

Form PCT/ISA/210 (patent family annex) (January 2015)

**EP 4 442 752 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012087173 A